# EUROPEAN PATENT APPLICATION

(11) **EP 4 793 552 A1**
(43) Date of publication of application: **19.08.2026**
(21) Application number: 26158596.2
(22) Date of filing: 13.02.2026
(51) Int. Cl.: F23R 3/28

(54) **NOZZLE ASSEMBLY, COMBUSTOR AND GAS TURBINE COMPRISING THE SAME**

(30) Priority: 18.02.2025 KR 20250020598
(71) Applicant: Doosan Enerbility Co., Ltd., Changwon-si, Gyeongsangnam-do 641-792 (KR)
(72) Inventor: CHOI, In Chan, Changwon-si (KR)
(74) Representative: Ter Meer Steinmeister & Partner

(57) **Abstract**

Proposed is a nozzle assembly, a combustor, and a gas turbine including the same, the nozzle assembly including a nozzle module unit including a plurality of tubes injecting fuel and compressed air into a combustion chamber of the gas turbine, and a casing accommodating the nozzle module unit therein, wherein the nozzle module unit includes a central nozzle module injecting fuel and compressed air and located at a central portion of the casing, and a plurality of outer nozzle modules located outside the central nozzle module while being spaced apart from the central nozzle module, and an anti-air-leakage sealing unit is installed among the inner circumferential surface of the casing, the central nozzle module, and the plurality of outer nozzle modules to prevent air leakage into the combustion chamber.

## Description

### CROSS REFERENCE TO RELATED APPLICATION

This application claims priority to Korean Patent Application No. 10-2025-0020598, filed February 18, 2025, the entire contents of which are incorporated herein by reference.

### BACKGROUND OF THE INVENTION

### Field of the Invention:

The present disclosure relates to a nozzle assembly, a combustor, and a gas turbine including the same. More particularly, the present disclosure relates to a nozzle assembly, and a combustor and a gas turbine using the same, the nozzle assembly being provided at the combustor of the gas turbine and mixing fuel and compressed air and injecting the mixture into a combustion chamber of the combustor.

### Description of the Related Art:

A turbomachine is a device that generates power used for electricity generation by using a fluid (particularly, gas) that passes through it. Therefore, the turbomachine is typically installed and used together with a generator. The turbomachine may be a gas turbine, a steam turbine, a wind power turbine, etc. The gas turbine is a device that generates combustion gas by mixing compressed air and natural gas and burning the mixture, and uses the combustion gas to generate power for electricity generation. The steam turbine is a device that generates power used for electricity generation by using steam produced by heating water. The wind power turbine is a device that converts wind power into power used for electricity generation.

Among the turbomachines, the gas turbine includes a compressor, a combustor, and a turbine. The compressor is formed with a plurality of compressor vanes and a plurality of compressor blades that are alternately arranged inside a compressor casing. Furthermore, the compressor draws in external air through a compressor inlet scroll strut. The air drawn in is compressed by the compressor vanes and compressor blades as it passes through the inner space of the compressor. The combustor receives the compressed air from the compressor and mixes it with fuel.

Furthermore, the combustor ignites the fuel mixed with the compressed air by an igniter to generate high-temperature, high-pressure combustion gas. The combustion gas is supplied to the turbine. The turbine is formed with a plurality of turbine vanes and a plurality of turbine blades that are alternately arranged inside a turbine casing. Furthermore, the turbine receives the combustion gas from the combustor and allows it to pass therethrough. The combustion gas passing through the inner space of the turbine rotates the turbine blades, and the combustion gas that has completely passed through the inner space of the turbine is discharged outward through a turbine diffuser.

Among the turbomachines, the steam turbine includes an evaporator and a turbine. The evaporator heats water supplied from the external space to generate steam. The turbine is formed with a plurality of turbine vanes and a plurality of turbine blades that are alternately arranged in a turbine casing, like the turbine of the gas turbine. However, the turbine of the steam turbine allows steam generated in the evaporator, not the combustion gas, to pass through the inner space thereof to rotate the turbine blades.

Meanwhile, among the turbomachines, the gas turbine may use hydrogen as fuel. To efficiently inject substances with rapid flame speeds, such as hydrogen, a structure using a plurality of tubes and supplying fuel and air to a combustion chamber is proposed. As described above, the fuel injection structure using a plurality of tubes distributes an air flow and a fuel flow throughout the plurality of tubes. Accordingly, the fuel injection structure offers excellent fuel-air mixing efficiency and reduced nitrogen oxide emissions.

However, air leakage may occur through a gap between adjacent nozzles, which include a plurality of tubes and supply fuel and air into the combustion chamber, degrading the combustion performance of the device. Therefore, research is being carried out to prevent air leakage through the gap between the nozzles.

Documents of Related Art Korean Patent Document No. KR 10-2474179 B

### SUMMARY OF THE INVENTION

Accordingly, the present disclosure has been made in view of the above problems occurring in the related art, and an objective of the present disclosure is to provide a nozzle assembly, and a combustor and a gas turbine including the same, the nozzle assembly being capable of preventing air leakage from occurring through a gap between a central nozzle module and a plurality of outer nozzle modules, each nozzle module including a plurality of tubes injecting fuel and compressed air into a combustion chamber of a gas turbine.

In order to achieve the above objective, according to the present disclosure, there is provided a nozzle assembly including: a nozzle module unit consisting of a plurality of tubes injecting fuel and compressed air into a combustion chamber; and a casing accommodating the nozzle module unit therein, wherein the nozzle module unit further includes: a central nozzle module injecting the fuel and the compressed air, and located at a central portion of the casing; and a plurality of outer nozzle modules located outside the central nozzle module while being spaced apart from the central nozzle module, wherein an anti-air-leakage sealing unit is provided to prevent air leakage into the combustion chamber through gaps formed between an inner circumferential surface of the casing, the central nozzle module, and the plurality of outer nozzle modules.

In the nozzle assembly according to the present disclosure, an outer sealing unit installation groove may be formed on a side surface of the central nozzle module, and an inner sealing unit installation groove may be formed on a side surface of each of the outer nozzle modules, the side surface of each of the outer nozzle modules being adjacent to the central nozzle module, and the anti-air-leakage sealing unit may include an inner seal having opposite ends that may be respectively inserted and installed in the outer sealing unit installation groove of the central nozzle module and the inner sealing unit installation groove of each of the outer nozzle modules.

The anti-air-leakage sealing unit may further include a side seal provided between the plurality of outer nozzle modules and including opposite ends inserted into side sealing unit installation grooves, which may be respectively formed on side surfaces of a first outer nozzle module of the plurality of outer nozzle modules and a second outer nozzle module adjacent to the first outer nozzle module, and a plate spring mounted to the side sealing unit installation grooves to which the side seal may be mounted, supporting the side seal on a lower portion of the side seal, and pushing the side seal upward in the side sealing unit installation grooves.

The inner seal may have a quadrilateral section, and an outer upper surface of a circumferential surface of the inner seal may include a contacting end that may be brought into close contact with an end of the side seal.

The side seal may be a quadrilateral rod, and a supporting end may protrude outward on the end of the side seal to support the contacting end, and the supporting end may be formed on a lower surface of the end of the side seal.

The plate spring may be formed in a multistage-curved shape that may be alternately rounded upward and downward in a longitudinal direction, and a lower surface thereof may be supported by a bottom surface of each side sealing unit installation groove, and an upper surface thereof may support the side seal to press the side seal upward.

The anti-air-leakage sealing unit may further include an outer seal including a side surface supported by an inner surface of the casing, and a central portion protruding in a round shape toward each outer nozzle module to support the side seal.

The outer seal may include a supporting groove into which an end of the side seal may be inserted, the supporting groove being provided to support the side seal.

An end of the side seal may include a mounting groove into which a contacting end may be inserted and mounted, and the contacting end may be formed to protrude outward from an outer central portion of the inner seal.

The inner seal may have a quadrilateral section, and an outer lower surface of a circumferential surface of the inner seal may include a first contacting end that may be brought into close contact with an end of the side seal, the side seal may be a quadrilateral rod, and a first supporting end may protrude outward on the end of the side seal to support the first contacting end, the first supporting end may be formed on an upper surface of the end of the side seal, and the plate spring may support the side seal on an upper portion of the side seal, and pushes the side seal downward in the side sealing unit installation grooves.

The central nozzle module and the outer nozzle modules may each include: a hollow nozzle frame; a mixture supplying tube including a plurality of tubes through which a mixture of the compressed air and the fuel may be supplied into the combustion chamber; a fuel supplying unit supplying the fuel into the mixture supplying tube; an air-supplying unit supplying the compressed air into the mixture supplying tube; and a mixing unit formed in each of the plurality of tubes and injecting the fuel supplied from the fuel supplying unit toward air flowing through the tube, wherein the mixing unit includes an injection member including a hollow tube with a flow path formed therein to allow the fuel and the compressed air to flow therethrough, a swirl vane formed at a portion of the injection member, and a flow path at a central portion to communicate with a central flow path of the hollow tube, the mixing unit mixing the fuel and the compressed air supplied from an outer space of the hollow tube with a wing formed on an outer portion, wherein the outer sealing unit installation groove may be formed on the nozzle frame of the central nozzle module, and the inner sealing unit installation groove and the side sealing unit installation grooves may be formed on the nozzle frame of each of the outer nozzle modules.

Furthermore, according to the present disclosure, there is provided a combustor that mixes compressed air supplied from a compressor of a gas turbine with fuel, burns the mixture, and supplies generated combustion gas into a turbine of the gas turbine, the combustor including: a nozzle casing; a liner connected to a turbine-side end portion of the nozzle casing, and including a combustion chamber formed therein and burning the mixture of the fuel and the compressed air; a transition piece connected to a turbine-side end portion of the liner, and supplying combustion gas generated from the combustion chamber to the turbine; and a nozzle assembly provided in the nozzle casing, and including a nozzle module unit including a plurality of tubes injecting the fuel and the compressed air into the combustion chamber, and a casing accommodating the nozzle module unit therein, wherein the nozzle module unit may further include: a central nozzle module injecting the fuel and the compressed air, and located at a central portion of the casing; and a plurality of outer nozzle modules located outside the central nozzle module while being spaced apart from the central nozzle module, wherein an anti-air-leakage sealing unit may be provided to prevent air leakage into the combustion chamber through gaps formed between an inner circumferential surface of the casing, the central nozzle module, and the plurality of outer nozzle modules.

Furthermore, according to the present disclosure, there is provided a gas turbine including: a compressor compressing air introduced from an outer space; a combustor mixing compressed air supplied from the compressor and fuel and burning the mixture; and a turbine allowing combustion gas supplied from the combustor to pass through an inner portion thereof, thereby generating power used for electricity generation, wherein the combustor may include: a nozzle casing; a liner connected to a turbine-side end portion of the nozzle casing, and including a combustion chamber formed therein and burning the mixture of the fuel and the compressed air; a transition piece connected to a turbine-side end portion of the liner, and supplying combustion gas generated from the combustion chamber to the turbine; and a nozzle assembly provided in the nozzle casing, and including a nozzle module unit including a plurality of tubes injecting the fuel and the compressed air into the combustion chamber, and a casing accommodating the nozzle module unit therein, wherein the nozzle module unit may further include: a central nozzle module injecting the fuel and the compressed air, and located at a central portion of the casing; and a plurality of outer nozzle modules located outside the central nozzle module while being spaced apart from the central nozzle module, wherein an anti-air-leakage sealing unit may be provided to prevent air leakage into the combustion chamber through gaps formed between an inner circumferential surface of the casing, the central nozzle module, and the plurality of outer nozzle modules.

According to the present disclosure, with the nozzle assembly, the combustor, and the gas turbine including the same, the anti-air-leakage sealing unit installed between the central nozzle module and the plurality of outer nozzle modules of the nozzle module unit, which injects fuel and compressed air into the combustion chamber of the gas turbine, can prevent air leakage into the combustion chamber through gaps between the central nozzle module and the outer nozzle modules. Therefore, it is possible to prevent deterioration in combustion performance and to secure and improve the combustion performance of the gas turbine.

### BRIEF DESCRIPTION OF THE DRAWINGS

FIG. 1 is a sectional view showing a gas turbine according to the present disclosure.
FIG. 2 is a cut-perspective view of a combustor shown in FIG. 1.
FIG. 3 is a schematic view showing the installation of a nozzle module unit of a nozzle assembly installed in a nozzle casing of the combustor shown in FIG. 2, and an anti-air-leakage sealing unit installed at the nozzle module unit.
FIG. 4 is a schematic sectional view of the nozzle assembly shown in FIG. 3.
FIG. 5 is an enlarged view showing the installation in which the anti-air-leakage sealing unit of a first embodiment is inserted in an outer sealing unit installation groove, an inner sealing unit installation groove, and a side sealing unit installation groove of the nozzle module unit shown in FIG. 3.
FIG. 6 is an enlarged view showing an inner seal in FIG. 5 that is supported by a side seal.
FIG. 7 is a view showing the side seal inserted in the side sealing unit installation groove in FIG. 6, which is supported by a plate spring.
FIG. 8 is a view showing a modified example of an outer seal shown in FIG. 5.
FIG. 9 is a view showing a modified example of the inner seal and the side seal shown in FIG. 6.
FIG. 10 is an enlarged view showing the installation in which the anti-air-leakage sealing unit of a second embodiment is inserted in the outer sealing unit installation groove, the inner sealing unit installation groove, and the side sealing unit installation groove of the nozzle module unit in FIG. 3.

### DETAILED DESCRIPTION OF THE DISCLOSURE

Hereinbelow, an exemplary embodiment of the present disclosure will be described in detail with reference to the accompanying drawings. Prior to the description, it should be noted that the terms and words used in the specification and the claims should not be construed as being limited to ordinary meanings or dictionary definitions. Meanwhile, the embodiments described in the specification and the configurations illustrated in the drawings are merely examples and do not exhaustively present the technical spirit of the present disclosure.

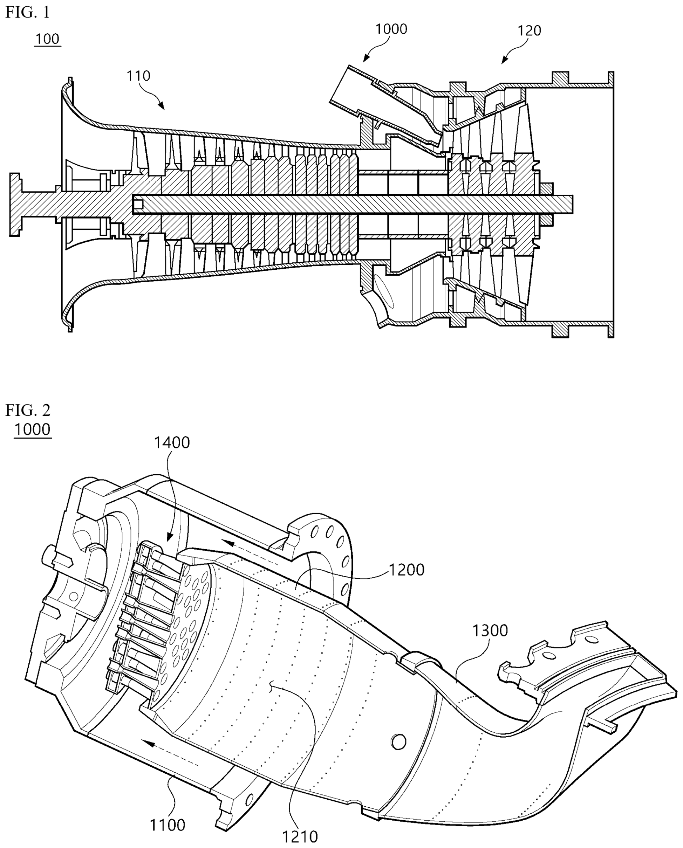

Referring to FIG. 1, a gas turbine 100 includes a compressor 110, a combustor 1000, and a turbine 120. Based on a flow direction of gas (compressed air or combustion air), the compressor 110 is disposed at an upstream location in the gas turbine 100, and the turbine 120 is disposed at a downstream location therein. Furthermore, the combustor 1000 is disposed between the compressor 110 and the turbine 120.

The compressor 110 stores a compressor vane and a compressor rotor in a compressor casing, and the turbine 120 stores a turbine vane and a turbine rotor in a turbine casing. The compressor vane and the compressor rotor are arranged in multistage in a flow direction of compressed air, and the turbine vane and the turbine rotor are also arranged in multistage in a flow direction of combustion gas. At this point, the compressor is formed with an inner space reduced in a direction from a front stage to a rear stage so as to compress the drawn air. On the other hand, the turbine 120 has a structure in which an inner space becomes larger in a direction from the front stage to the rear stage so as to allow combustion air supplied from the combustor to expand.

Meanwhile, a torque tube is disposed between the compressor rotor at the rearmost end portion of the compressor 110 and the turbine rotor at the foremost end portion of the turbine 120, as a torque transmission member to transmit rotational torque generated by the turbine 120 to the compressor 110. The torque member may consist of a plurality of torque tube discs arranged in three stages, which is merely one of several embodiments of the present disclosure. The torque tube may include a plurality of torque tube discs arranged in four or more stages or two or fewer stages.

The compressor rotor includes a compressor disc and a compressor blade. A plurality of compressor discs (e.g., 14 sheets of compressor discs) is provided in the compressor casing, and each of the compressor discs is fastened with a tie rod to prevent shaft-directional separation thereof. More specifically, each of the compressor discs is aligned in the shaft direction with the tie rod passing through a central portion thereof. Furthermore, one compressor disc and an adjacent compressor disc of the compressor discs are disposed so as not to rotate relative to each other, with their opposite surfaces compressed by the tie rod.

A plurality of compressor blades is radially coupled to an outer circumferential surface of each of the compressor discs. Furthermore, based on the same stage, a plurality of compressor vanes installed in a ring shape on an inner circumferential surface of the compressor casing is disposed between the compressor blades. The compressor vanes remain secured without being rotated, unlike the compressor discs, and serve to align a flow of compressed air passing through the compressor blades and guide the compressed air to the compressor blades located at the downstream. At this point, the compressor casing and the compressor vanes may be collectively referred to as a compressor stator to distinguish them from the compressor rotor.

The compressor stator includes a compressor inlet scroll strut in addition to the compressor casing and the compressor vanes. The compressor inlet scroll strut is connected to a front end of the compressor casing and guides external air to an inlet of the compressor casing. Meanwhile, among the compressor vanes, the compressor vane located at the foremost end is an inlet guide vane. The inlet guide vane guides air introduced into the compressor casing to the compressor blades and the compressor vane arranged at a rear end.

The tie rod is disposed to pass through the central portion of the plurality of compressor discs and the central portion of turbine discs, which will be described below. A first end portion of the tie rod is fastened to an inner portion of the compressor disc located at the foremost end portion of the compressor 110, and a second end portion thereof is fastened by a fixing nut.

The shape of the tie rod may be changed in various structures in response to the gas turbine, and is not necessarily limited to the shape shown in FIG. 1. In other words, one tie rod may be shaped to pass through the central portion of the compressor discs and the central portion of the turbine discs, as shown in the drawings, and a plurality of tie rods may be arranged circumferentially, and a combination thereof is also possible.

Not shown in the drawings, the compressor of the gas turbine may include a deswirler, which serves as a guiding vane installed to adjust the flow angle of a fluid entering the inlet of the combustor after the pressure of the fluid is increased, to a designed flow angle.

High-temperature, high-pressure combustion air discharged from the combustor 1000 is supplied to the above-described turbine 120. The high-temperature, high-pressure combustion gas supplied to the turbine 120 expands as it passes through the inner portion of the turbine 120. This expansion provides impulsive and reaction force on a turbine blade, as described later, to generate rotating torque. The rotating torque produced as described above passes through the above-described torque tube and is transmitted to the compressor, and a portion exceeding the power required to drive the compressor is used to drive a generator, etc.

The turbine 120 is fundamentally similar to a structure of the compressor 110. That is, the turbine 120 also includes a plurality of turbine rotors similar to the compressor rotor of the compressor 110. Therefore, the turbine rotor also includes turbine discs and a plurality of turbine blades arranged radially. Based on the same stage, a plurality of turbine vanes is provided between the turbine blades and arranged in a ring shape on the turbine casing, and the turbine vanes guide a flow direction of combustion gas passing through the turbine blades. At this point, the turbine casing and the turbine vanes may also be collectively referred to as a turbine stator to distinguish them from the turbine rotor.

As shown in FIGS. 1 and 2, according to the present disclosure, the combustor 1000 includes a nozzle casing 1100, a liner 1200, a transition piece 1300, and a nozzle assembly 1400. The nozzle casing 1100 has a hollow cylindrical shape and receives fuel from the external part. The nozzle casing 1100 includes a casing head (not shown), and the casing head (not shown) covers the nozzle casing 1100 from the front space of the nozzle casing 1100. The liner 1200 is disposed inside the nozzle casing 1100 and has a hollow cylindrical shape. Furthermore, compressed air flows from the rear space toward the front space between the liner 1200 and the nozzle casing 1100, and fuel and compressed air are injected inward through the front portion.

Furthermore, as the mixture of the fuel and the compressed air injected into the liner 1200 is burned, high-pressure, high-temperature flames and combustion air are generated. At this point, the space where combustion occurs in the liner 1200 is the combustion chamber 1210. A liner head (not shown) is installed at a front portion of the liner 1200, and the liner head (not shown) mixes supplied fuel and compressed air and supplies the mixture thereof into the liner 1200.

An end of the liner 1200 at the turbine 120 is connected to the transition piece 1300, and the transition piece 1300 supplies combustion air generated from the combustion chamber 1210 into the turbine 120. The transition piece 1300 includes a transition piece ring-shaped flow passage formed to surround the internal space of the transition piece 1300, and compressed air flowing along the transition piece ring-shaped flow passage cools an outer wall portion to prevent damage due to the high temperature of combustion air.

The internal space of the nozzle casing 1100, more specifically, the liner head (not shown) includes the nozzle assembly 1400 installed thereto. The nozzle assembly 1400 mixes fuel and compressed air and injects the mixture into the combustion space 1210.

The nozzle assembly 1400 includes a nozzle module unit 1410 and a casing 1420. The nozzle module unit 1410 injects the fuel and the compressed air into the combustion chamber 1210, and the nozzle module unit 1410 is accommodated in the casing 1420.

The nozzle module unit 1410 includes a central nozzle module 1410A, which injects the fuel and the compressed air and is disposed at a central portion of the casing 1420, and a plurality of outer nozzle modules 1410B disposed outside the central nozzle module 1410A while being spaced apart from the central nozzle module 1410A.

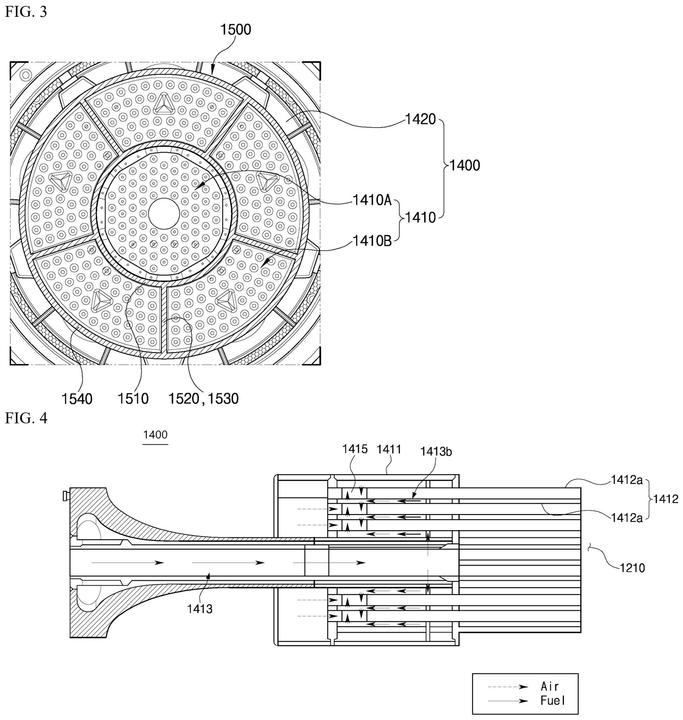

Referring to FIGS. 2 and 3, an anti-air-leakage sealing unit 1500 is installed among the inner circumferential surface of the casing 1420, the central nozzle module 1410A, and the plurality of outer nozzle modules 1410B to prevent air leakage into the combustion chamber 1210.

Referring to FIGS. 3 and 4, the central nozzle module 1410A and the plurality of outer nozzle modules 1410B each include a nozzle frame 1411, a mixture supplying tube 1412, a fuel supplying unit 1413, an air-supplying unit 1414, and a mixing unit 1415.

The nozzle frame 1411 has a hollow tubular shape, and the mixture supplying tube 1412, the fuel supplying unit 1413, the air-supplying unit 1414, and the mixing unit 1415 are disposed within the nozzle frame.

The mixture supplying tube 1412 includes a plurality of tubes 1412a. A first end of each tube 1412a is connected to the air-supplying unit 1414, and a second end communicates with the combustion chamber 1210.

Each tube 1412a supplies mixed air, which is produced by mixing fuel supplied to the tube 1412a and air supplied from the air-supplying unit 1414, into the combustion chamber 1210.

Furthermore, the tube 1412a is supported by a pair of tube sheets 1412b disposed in the longitudinal direction while being spaced apart from each other.

The fuel supplying unit 1413 includes a fuel supplying tube 1413a formed at a central portion of the nozzle frame 1411 in the longitudinal direction and a return member 1413b disposed outside the fuel supplying tube 1413a.

The fuel supplying tube 1413a supplies fuel from the upstream location (left side in FIG. 4) in the nozzle frame 1411 to the downstream location (right side in FIG. 4) in the nozzle frame 1411.

The fuel may be hydrogen. In the embodiment, hydrogen is used as the fuel, but other fuels, such as Liquefied Natural Gas (LNG), may be used instead.

The return member 1413b moves fuel, which is moved from the fuel supplying tube 1413a downstream (right side in FIG. 4) in the nozzle frame 1411, upstream in the nozzle frame 1411, and then supplies it into the tube 1412a of the mixture supplying tube 1412. The return member 1413b may be formed from a member forming a space between the tubes 1412a.

The air-supplying unit 1414 is formed at the upstream location of the tubes 1412a. The air-supplying unit 1414 supplies air from the outer space of the nozzle assembly into the tube 1412a. The air may be compressed air supplied from the compressor.

The mixing unit 1415 is formed in each tube 1412a, injects fuel supplied from the fuel supplying unit 1413 toward air passing through the tube 1412a, and including an injection member (not shown) including a hollow tube with a flow path formed therein to allow the fuel and the air to flow therein, and including a swirl vane (not shown) formed at a portion of the injection member (not shown), including a flow path at a central portion to communicate with the central flow path of the hollow tube, and mixing the fuel and the air supplied from the outer space of the hollow tube with a wing formed on an outer portion thereof. The mixing unit 1415 varies the speeds of a central flow CF flowing through a central portion of the tube 1412a and a spiral flow SF flowing through an outside portion, thereby improving the mixing efficiency of fuel and air.

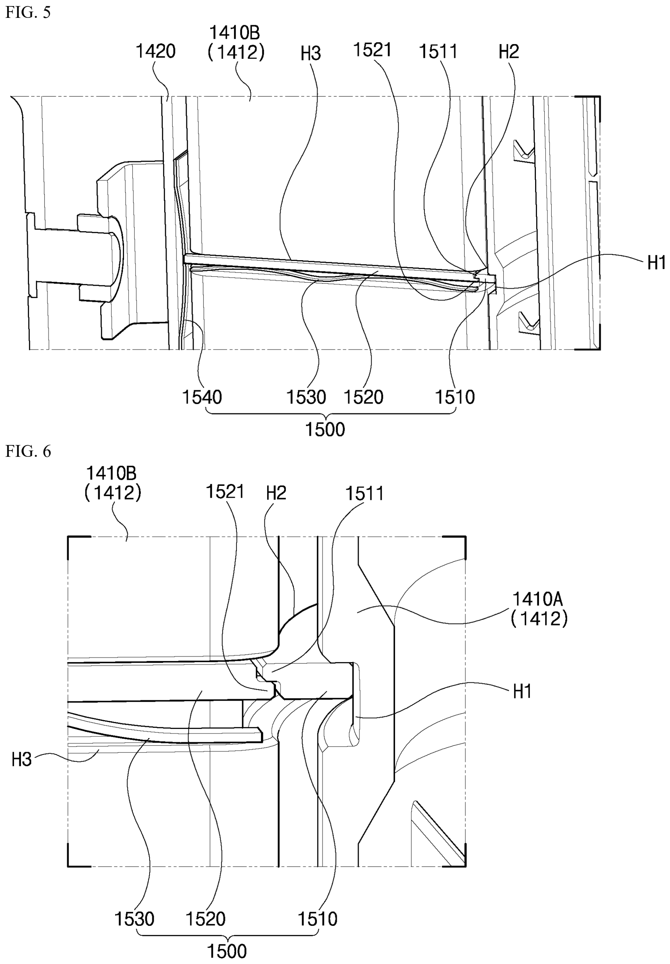

Referring to FIGS. 3 and 5, an outer sealing unit installation groove H1 is formed on the nozzle frame 1411 of the central nozzle module 1410A, an inner sealing unit installation groove H2 and a side sealing unit installation groove H3 are formed on the nozzle frame 1411 of each outer nozzle module 1410B, and the anti-air-leakage sealing unit 1500 is installed within the outer sealing unit installation groove H1, the inner sealing unit installation groove H2, and the side sealing unit installation groove H3.

The outer sealing unit installation groove H1 is formed on a side surface of the nozzle frame 1411 of the central nozzle module 1410A, and the inner sealing unit installation groove H2 is formed on an inner surface of the nozzle frame 1411 of each outer nozzle modules 1410B, the inner surface being adjacent of the central nozzle module 1410A. The side sealing unit installation groove H3 is formed on side surfaces of a first outer nozzle module of the plurality of outer nozzle modules and of a second outer nozzle module adjacent to the first outer nozzle module.

Referring to FIGS. 3, 5, and 7, the anti-air-leakage sealing unit 1500 includes an inner seal 1510, a side seal 1520, a plate spring 1530, and an outer seal 1540. The inner seal 1510 has a quadrilateral section, and an outer upper surface of a circumferential surface of the inner seal 1510 includes a contacting end 1511 that is brought into close contact with an end of the side seal 1520.

The inner seal 1510 is installed between the central nozzle module 1410A and the plurality of outer nozzle modules 1410B, with the opposite ends of the inner seal 1510 inserted into the outer sealing unit installation groove H1 of the central nozzle module 1410A and the inner sealing unit installation groove H2 of each outer nozzle module 1410B.

The side seal 1520 has a quadrangular rod shape, and an end of the side seal 1520 includes a supporting end 1521 protruding outward therefrom and supporting the contacting end 1511, and the supporting end 1521 is formed on a lower surface of the end of the side seal 1520. The side seal 1520 is installed by being inserted into the side sealing unit installation groove H3 formed on a side surface of a first outer nozzle module of the plurality of outer nozzle modules 1410B, and into the side sealing unit installation groove H3 formed on a side surface of a second outer nozzle module adjacent to the first outer nozzle module 1410B.

The plate spring 1530 is mounted to the side sealing unit installation grooves H3 with the side seal 1520 mounted. The plate spring 1530 supports the side seal 1520 on its lower side and pushes the side seal 1520 upward in the side sealing unit installation groove H3.

The plate spring 1530 has a multistage-curved shape that is alternately rounded upward and downward in the longitudinal direction, and a lower surface of the plate spring 1530 is supported by the bottom surfaces of the side sealing unit installation grooves H3, and an upper surface thereof supports the side seal 1520 to press and move the side seal 1520 upward. As the side seal 1520 is moved upward, the inner seal 1510 supported by the supporting end 1521 of the side seal 1520 is moved upward in the outer sealing unit installation groove H1 and the inner sealing unit installation groove H2.

A side surface of the outer seal 1540 is supported by an inner surface of the casing 1420, and a central portion of the outer seal 1540 protrudes in a round shape toward each outer nozzle module 1410B to support the side seal 1520, and the outer seal 1540 and the side seal 1520 prevent air from leaking to the combustion chamber through a gap between the casing 1420 and the plurality of outer nozzle modules 1410B.

The side seal 1520 prevents air leakage into the combustion chamber through a gap between the plurality of outer nozzle modules 1410B, and the inner seal 1510 prevents air leakage into the combustion chamber through a gap between the plurality of outer nozzle modules 1410B and the central nozzle module 1410A.

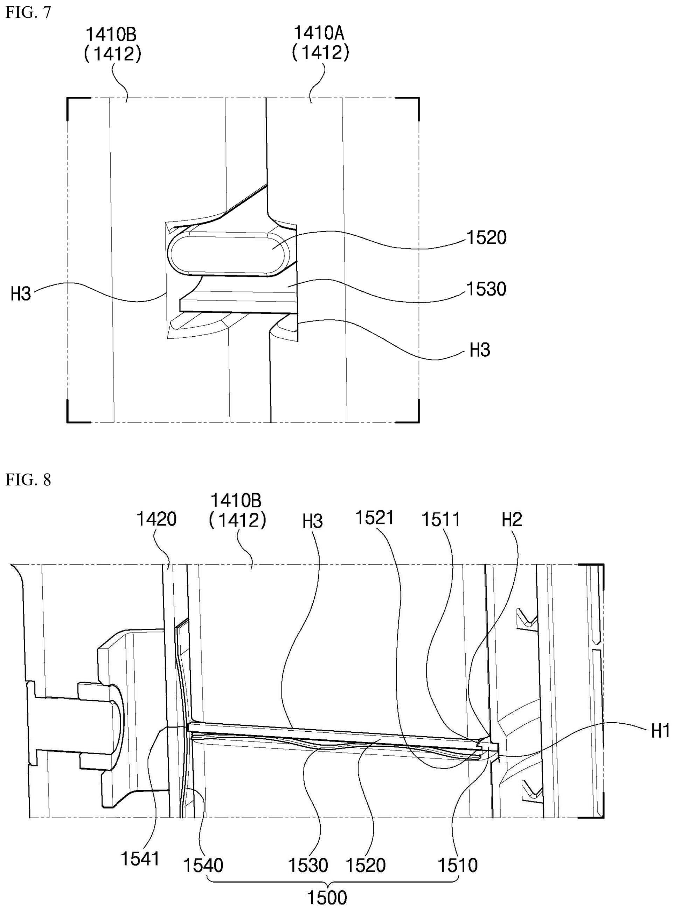

Referring to FIG. 8, the outer seal 1540 includes a supporting groove 1541 that accommodates an end of the side seal 1520 inserted thereinto and supports the side seal 1520. The supporting groove 1541 is preferably formed at a central portion of the outer seal 1540 that supports an end of the side seal 1520.

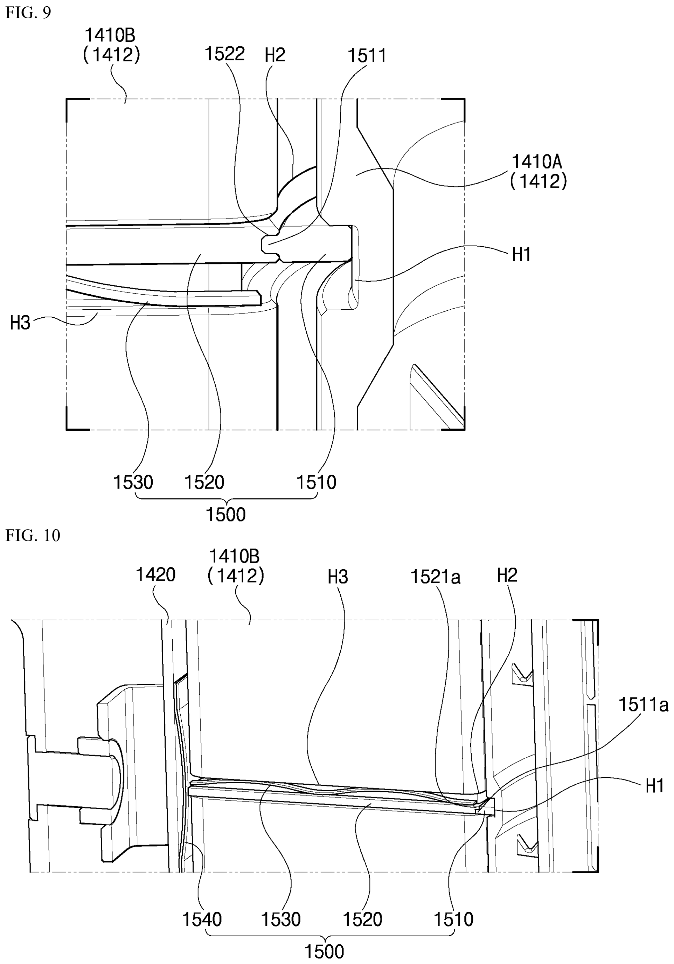

Referring to FIG. 9, the contacting end 1511 is formed by protruding outward from an outer central portion of the circumferential surface of the inner seal 1510, and an end of the side seal 1520 includes a supporting groove 1522 that accommodates the contacting end 1511 inserted thereinto and supports the contacting end 1511.

Referring to FIGS. 3, 5, 6, and 10, the anti-air-leakage sealing unit 1500 includes the inner seal 1510, the side seal 1520, the plate spring 1530, and the outer seal 1540. The inner seal 1510 has a quadrilateral section, and a lower surface of the circumferential surface of the inner seal 1510 includes a first contacting end 1511a that is brought into close contact with an end of the side seal 1520.

The inner seal 1510 is installed between the central nozzle module 1410A and the plurality of outer nozzle modules 1410B, with the opposite ends of the inner seal 1510 inserted into the outer sealing unit installation groove H1 of the central nozzle module 1410A and the inner sealing unit installation groove H2 of each outer nozzle module 1410B.

The side seal 1520 has a quadrangular rod shape, and an end of the side seal 1520 includes a first supporting end 1521a protruding outward therefrom and supporting the first contacting end 1511a, and the first supporting end 1521a is formed on an upper surface of the end of the side seal 1520. The side seal 1520 is installed by being inserted into the side sealing unit installation groove H3 formed on a side surface of a first outer nozzle module of the plurality of outer nozzle modules 1410B, and the side sealing unit installation groove H3 formed on a side surface of a second outer nozzle module adjacent to the first outer nozzle module.

The plate spring 1530 is mounted to the side sealing unit installation grooves H3 with the side seal 1520 mounted. The plate spring 1530 supports the side seal 1520 on the upper side and pushes the side seal 1520 downward in the side sealing unit installation groove H3.

The plate spring 1530 has a multistage-curved shape that is alternately rounded upward and downward in the longitudinal direction, and an upper surface of the plate spring 1530 is supported by the upper surfaces of the side sealing unit installation grooves H3, and a lower surface thereof supports the side seal 1520 to press and move the side seal 1520 downward. As the side seal 1520 is moved downward, the inner seal 1510 supported by the supporting end 1521a of the side seal 1520 is moved downward in the outer sealing unit installation groove H1 and the inner sealing unit installation groove H2.

Therefore, the anti-air-leakage sealing unit 1500 installed between the central nozzle module 1410A and the plurality of outer nozzle modules 1410B of the nozzle module unit 1410, which injects fuel and compressed air to the combustion chamber 1210 of the gas turbine 100, prevents air leakage toward the combustion chamber through a gap between the central nozzle module 1410A and the plurality of outer nozzle modules 1410B and prevents deterioration in combustion performance, so that the combustion performance of the gas turbine can be improved.

Although the preferred embodiments of the present disclosure have been disclosed for illustrative purposes in reference to the drawings, those skilled in the art will appreciate that various modifications, additions and substitutions are possible, without departing from the scope and spirit of the disclosure as disclosed in the accompanying claims. Therefore, the patent right of the present disclosure should be defined by the scope of the present disclosure as disclosed in the accompanying claims.

## Claims

1. A nozzle assembly(1400) comprising:
a nozzle module unit(1410) comprising a plurality of tubes(1412a) injecting fuel and compressed air into a combustion chamber(1210); and
a casing(1420) accommodating the nozzle module unit(1410) therein,
wherein the nozzle module unit(1410) further comprises:
a central nozzle module(1410A) injecting fuel and compressed air, and located at a central portion of the casing(1420); and
a plurality of outer nozzle modules(1410B) located outside the central nozzle module(1410A) while being spaced apart from the central nozzle module(1410A),
wherein an anti-air-leakage sealing unit(1500) is provided to prevent air leakage into the combustion chamber(1210) through gaps formed between an inner circumferential surface of the casing(1420), the central nozzle module(1410A), and the plurality of outer nozzle modules(1410B).

2. The nozzle assembly(1400) of claim 1, wherein an outer sealing unit installation groove(H1) is formed on a side surface of the central nozzle module(1410A), and an inner sealing unit installation groove(H2) is formed on a side surface of each of the outer nozzle modules(1410B), the side surface of each of the outer nozzle modules(1410B) being adjacent to the central nozzle module(1410A), and
the anti-air-leakage sealing unit(1500) includes an inner seal(1510) having opposite ends that are respectively inserted and installed in the outer sealing unit installation groove(H1) of the central nozzle module(1410A) and the inner sealing unit installation groove(H2) of each of the outer nozzle modules(1410B).

3. The nozzle assembly(1400) of claim 2, wherein the anti-air-leakage sealing unit1500) further comprises a side seal(1520) provided between the plurality of outer nozzle modules(1410B) and comprising opposite ends inserted into side sealing unit installation grooves(H3), which are respectively formed on side surfaces of a first outer nozzle module(1410B) of the plurality of outer nozzle modules(1410B) and a second outer nozzle module(1410B) adjacent to the first outer nozzle module(1410B),
Wherein the anti-air-leakage sealing unit(1500) further comprises a plate spring(1530) mounted to the side sealing unit installation grooves(H3) to which the side seal is mounted, supporting the side seal(1520) on a lower portion of the side seal(1520), and pushing the side seal upward in the side sealing unit installation grooves(H3).

4. The nozzle assembly(1400) of claim 3, wherein the inner seal(1510) has a quadrilateral section, and an outer upper surface of a circumferential surface of the inner seal(1510) comprises a contacting end(1511) that is brought into close contact with an end of the side seal(1520).

5. The nozzle assembly(1400) of claim 4, wherein the side seal(1520) is a quadrilateral rod, and a supporting end(1521) protrudes outward on the end of the side seal to support the contacting end(1511), and
the supporting end(1521) is formed on a lower surface of the end of the side seal(1520).

6. The nozzle assembly(1400) of claim 3, wherein the plate spring(1530) is formed in a multistage-curved shape that is alternately rounded upward and downward in a longitudinal direction, and a lower surface thereof is supported by a bottom surface of each side sealing unit installation groove(H3), and an upper surface thereof supports the side seal(1520) to press the side seal(1520) upward.

7. The nozzle assembly(1400) of claim 3, wherein the anti-air-leakage sealing unit(1500) further comprises an outer seal(1540) comprising a side surface supported by an inner surface of the casing(1420), and a central portion protruding in a round shape toward the outer nozzle modules(1410B) to support the side seal(1520).

8. The nozzle assembly(1400) of claim 7, wherein the outer seal(1540) comprises a supporting groove(1541) into which an end of the side seal(1520) is inserted, the supporting groove(1541) being provided to support the side seal(1520).

9. The nozzle assembly(1400) of claim 3, wherein an end of the side seal(1520) comprises a mounting groove into which a contacting end(1511) is inserted and mounted, and
the contacting end(1511) is formed to protrude outward from an outer central portion of the inner seal(1510).

10. The nozzle assembly(1400) of claim 3, wherein the inner seal(1510) has a quadrilateral section, and an outer lower surface of a circumferential surface of the inner seal(1510) comprises a first contacting end(1511a) that is brought into close contact with an end of the side seal(1520),
the side seal(1520) is a quadrilateral rod, and a first supporting end(1521a) protrudes outward on the end of the side seal(1520) to support the first contacting end(1511a),
the first supporting end(1521a) is formed on an upper surface of the end of the side seal(1520), and
the plate spring(1530) supports the side seal(1520) on an upper portion of the side seal(1520), and pushes the side seal downward in the side sealing unit installation grooves(H3).

11. The nozzle assembly(1400) of claim 3, wherein the central nozzle module(1410A) and the plurality of outer nozzle modules(1410B) each comprise:
a hollow nozzle frame(1411);
a mixture supplying tube(1412) including a plurality of tubes(1412a) through which a mixture of the compressed air and the fuel is supplied into the combustion chamber(1210);
a fuel supplying unit(1413) supplying the fuel into the mixture supplying tube(1412);
an air-supplying unit(1414) supplying the compressed air into the mixture supplying tube(1412); and
a mixing unit(1415) formed in each of the plurality of tubes(1412a) and injecting the fuel supplied from the fuel supplying unit(1413) toward the compressed air passing through the tube,
wherein the mixing unit(1415) includes an injection member comprising a hollow tube with a flow path formed therein to allow the fuel and the compressed air to flow therethrough, a swirl vane formed at a portion of the injection member, and a flow path at a central portion to communicate with a central flow path of the hollow tube, the mixing unit mixing the fuel and the compressed air supplied from an outer space of the hollow tube with a wing formed on an outer portion,
wherein the outer sealing unit installation groove(H1) is formed on the nozzle frame(1411) of the central nozzle module(1410A), and the inner sealing unit installation groove(H2) and the side sealing unit installation grooves(H3) are formed on the nozzle frame(1411) of each of the outer nozzle modules(1410B).

12. A combustor that mixes compressed air supplied from a compressor(110) of a gas turbine(100) with fuel, burns the mixture, and supplies generated combustion gas into a turbine(120) of the gas turbine(100), the combustor(1000) comprising:
a nozzle casing(1100);
a liner(1200) connected to a turbine(120)-side end portion of the nozzle casing(1100), and comprising a combustion chamber(1210) formed therein and burning the mixture of the fuel and the compressed air;
a transition piece(1300) connected to a turbine(120)-side end portion of the liner(1200), and supplying the combustion gas generated from the combustion chamber(1210) to the turbine(120); and
a nozzle assembly(1400) provided in the nozzle casing(1100), and comprising a nozzle module unit(1410) comprising a plurality of tubes(1412a) injecting the fuel and the compressed air into the combustion chamber(1210), and a casing(1420) accommodating the nozzle module unit(1400) therein,
wherein the nozzle module unit(1400) further comprises:
a central nozzle module(1410A) injecting fuel and compressed air, and located at a central portion of the casing(1420); and
a plurality of outer nozzle modules(1410B) located outside the central nozzle module(1410A) while being spaced apart from the central nozzle module(1410A),
wherein an anti-air-leakage sealing unit(1500) is provided to prevent air leakage into the combustion chamber(1210) through gaps formed between an inner circumferential surface of the casing(1420), the central nozzle module(1410A), and the plurality of outer nozzle modules(1410B).

13. The combustor of claim 12, wherein an outer sealing unit installation groove(H1) is formed on a side surface of the central nozzle module(1410A), and an inner sealing unit installation groove(H2) is formed on a side surface of each of the outer nozzle modules(1410B), the side surface of each of the outer nozzle modules(1410B) being adjacent to the central nozzle module(1410A), and
wherein the anti-air-leakage sealing(1500) unit further comprises:
an inner seal(1510) comprising opposite ends installed by being inserted into the outer sealing unit installation groove(H1) of the central nozzle module(1410A) and the inner sealing unit installation groove(H2) of each of the outer nozzle modules(1410B);
a side seal(1520) provided between the plurality of outer nozzle modules(1410B), and comprising opposite ends that are inserted into the side sealing unit installation grooves(H3), which are formed on side surfaces of a first outer nozzle module(1410B) of the plurality of outer nozzle modules(1410B) and a second outer nozzle module(1410B) adjacent to the first outer nozzle module(1410B);
a plate spring(1530) mounted to the side sealing unit installation grooves(H3) to which the side seal is mounted, and supporting the side seal(1520) on a lower portion of the side seal(1520), and pushing the side seal upward in the side sealing unit installation grooves(H3); and
an outer seal having a side surface supported by an inner surface of the casing(1420) and a central portion protruding in a round shape toward the outer nozzle modules(1410B) to support the side seal(1520),
wherein the inner seal(1510) has a quadrilateral section, and a contacting end(1511) is formed on an outer upper surface of a circumferential surface of the inner seal(1510) to be brought into close contact with an end of the side seal(1520),
the side seal(1520) is a quadrilateral rod, and a supporting end(1521) protrudes outward on the end of the side seal to support the contacting end(1511),
the supporting end(1521) is formed on a lower surface of the end of the side seal(1520), and
the plate spring(1530) is formed in a multistage-curved shape that is alternately rounded upward and downward in a longitudinal direction, and a lower surface thereof is supported by bottom surfaces of the side sealing unit installation grooves(H3), and an upper surface thereof supports the side seal(1520) to press the side seal(1520) upward,
wherein the outer seal(1540) comprises a supporting groove(1541) into which an end of the side seal(1520) is inserted, the supporting groove(1541) being provided to support the side seal(1520),
wherein an end of the side seal(1520) comprises a mounting groove into which a contacting end(1511) is inserted and mounted, and
the contacting end(1511) is formed by protruding outward from an outer central portion of the inner seal(1510).

14. The combustor of claim 12, wherein the inner seal(1510) has a quadrilateral section, and an outer lower surface of a circumferential surface of the inner seal(1510) comprises a first contacting end(1511a) that is brought into close contact with an end of the side seal(1520),
the side seal(1520) is a quadrilateral rod, and a first supporting end(1521a) protrudes outward from the end of the side seal(1520) to support the first contacting end(1511a),
the first supporting end(1521a) is formed on an upper surface of the end of the side seal(1520), and
the plate spring(1530) supports the side seal(1520) on an upper portion of the side seal(1520), and pushes the side seal downward in the side sealing unit installation grooves(H3),
wherein the central nozzle module(1410A) and the plurality of outer nozzle modules(1410B) each comprise:
a hollow nozzle frame(1411);
a mixture supplying tube(1412) including a plurality of tubes(1412a) through which a mixture of the compressed air and the fuel is supplied into the combustion chamber(1210);
a fuel supplying unit(1413) supplying the fuel into the mixture supplying tube(1412);
an air-supplying unit supplying(1414) the compressed air into the mixture supplying tube(1412); and
a mixing unit(1415) formed in each of the plurality of tubes(1412a) and injecting the fuel supplied from the fuel supplying unit(1413) toward the compressed air passing through the tube,
wherein the mixing unit(1415) includes an injection member comprising a hollow tube with a flow path formed therein to allow the fuel and the compressed air to flow therethrough, a swirl vane formed at a portion of the injection member, and a flow path at a central portion to communicate with a central flow path of the hollow tube, the mixing unit mixing the fuel and the compressed air supplied from an outer space of the hollow tube with a wing formed on an outer portion,
wherein the outer sealing unit installation groove(H1) is formed on the nozzle frame(1411) of the central nozzle module(1410A), and the inner sealing unit installation groove(H2) and the side sealing unit installation grooves(H3) are formed on the nozzle frame(1411) of each of the outer nozzle modules(1410B).

15. A gas turbine(100) comprising:
a compressor(110) compressing air introduced from an outer space;
a combustor(1000) mixing compressed air supplied from the compressor(110) and fuel, and burning the mixture; and
a turbine(120) allowing combustion gas supplied from the combustor(1000) to pass through an inner portion thereof,
wherein the combustor(1000) comprises:
a nozzle casing(1100);
a liner(1200) connected to a turbine(120)-side end portion of the nozzle casing(1100), and comprising a combustion chamber(1210) formed therein and burning the mixture of the fuel and the compressed air;
a transition piece(1300) connected to a turbine(120)-side end portion of the liner(1200), and supplying the combustion gas generated from the combustion chamber(1210) to the turbine(120); and
a nozzle assembly(1400) provided in the nozzle casing(1100), and comprising a nozzle module unit(1410) comprising a plurality of tubes(1412a) injecting the fuel and the compressed air into the combustion chamber(1210), and a casing(1420) accommodating the nozzle module unit1400) therein,
wherein the nozzle module(1400) unit further comprises:
a central nozzle module(1410A) injecting fuel and compressed air, and located at a central portion of the casing(1420); and
a plurality of outer nozzle modules(1410B) located outside the central nozzle module1410A) while being spaced apart from the central nozzle module(1410A),
wherein an anti-air-leakage sealing unit(1500) is provided to prevent air leakage into the combustion chamber(1210) through gaps formed between an inner circumferential surface of the casing(1420), the central nozzle module(1410A), and the plurality of outer nozzle modules(1410B).
